# EUROPÄISCHE PATENTSCHRIFT

(11) **EP 1 279 908 B1**
(45) Veröffentlichungstag und Bekanntmachung des Hinweises auf die Patenterteilung: **03.01.2007**
(21) Anmeldenummer: 02015697.2
(22) Anmeldetag: 18.07.2002
(51) Int. Cl.: F25B 30/04, F25B 35/04, F25B 17/08

(54) **Adsorptionswärmepumpe**
Adsorption heat pump
Pompe à chaleur à adsorption

(30) Priorität: 23.07.2001 DE 10136836; 16.08.2001 AT 12812001
(43) Veröffentlichungstag der Anmeldung: 29.01.2003
(73) Patentinhaber: Vaillant GmbH, 42859 Remscheid (DE)
(72) Erfinder: Heim, Johann-Ludwig, 42857 Remscheid (DE); Hocker, Thomas, Dr., 42857 Remscheid (DE); Lang, Rainer, Dr., 51067 Köln (DE); Marth, Frank, 56581 Melsbach (DE); Marx, Uwe, 51375 Leverkusen (DE); Prescha, Ralph, 42659 Solingen (DE); Wienen, Johann, 46359 Heiden (DE)
(74) Vertreter: Hocker, Thomas

(56) Entgegenhaltungen:
- EP-A- 0 825 392
- DE-A- 4 201 972
- DE-A- 19 714 760
- DE-A- 19 961 638
- DE-U- 29 906 482

## Beschreibung

Die vorliegende Erfindung bezieht sich auf eine Adsorptionswärmepumpe mit einem Wärmetauscher gemäß dem einleitenden Teil des unabhängigen Patentanspruchs.

Es sind Wärmetauscher beliebiger Bauart bekanntgeworden, die in den Primärkreislauf einer Adsorptionswärmepumpe eingefügt werden, um ein von einem Brenner beheiztes Wärmeträgermedium zu erzeugen. Weiterhin sind Abgaswärmetauscher bekanntgeworden, die in den Abgaspfad eines Heizkessels oder Umlaufwasserheizers eingefügt werden und abgasseitig dem Primärwärmetauscher nachgeschaltet sind.

Dokument EP-A-0825392 offenbart ein solcher Wärmetauscher.

Der vorliegenden Erfindung liegt die Aufgabe zugrunde, solche Wärmetauscher möglichst zusammenzufassen, so daß also der Primärwärmetauscher und der Abgaswärmetauscher ein Bauteil bilden und dieses so zu verschalten, daß bei Anwendung in einer Adsorptionswärmepumpe ein Maximum an Wärme aus dem Abgas herausgeholt wird und der Wärmepumpe zugeführt wird.

Die Lösung dieser Aufgabe liegt in den kennzeichnenden Merkmalen des unabhängigen Patentanspruchs.

Als Ergebnis dieser Anweisung resultiert ein kompakter Wärmetauscher, der in zwei Stufen das Abgas bis auf nahezu Außentemperatur herunterkühlt, wobei die aufgrund der unterschiedlichen Temperaturniveaus entstehenden Teilströme dort in die Wärmepumpe eingefügt werden, wo sie aufgrund ihrer Temperaturniveaus den größten Nutzen aufweisen.

Der Gegenstand des ersten abhängigen Patentanspruchs führt zu einer Optimierung des Wärmetauschers. Dies ist besonders zweckmäßig im Hinblick auf das Erzielen eines möglichst hohen Wirkungsgrades bei nicht allzu hoch ansteigenden Kosten. Die Maßnahmen nach dem zweiten abhängigen Patentanspruch führen zu einer optimierenden Auslegung des Wärmetauschers.

Die Anweisung nach dem letzten abhängigen Patentanspruch verhindert eine ungewollte Verschlechterung des Wirkungsgrades der Adsorptionswärmepumpe.

Ein Ausführungsbeispiel der Erfindung wird anhand der Figuren 1 bis 3 der Zeichnung im folgenden näher erläutert.

Es zeigen:
- Fig. 1: eine Prinzipquerschnittsdarstellung eines Wärmetauschers
- Fig. 2: die Ansicht auf seine Stirnseite und
- Fig. 3: die Verschaltung der Elemente einer Adsorptionswärmepumpe.

In allen 3 Figuren bedeuten die gleichen Bezugszeichen jeweils die gleichen Einzelheiten.

Ein Wärmetauscher 1 einer Adsorptionswärmepumpe 2 besteht aus einer Wandung an Wandung mit Spalt gewickelten Rohrwendel 3, die sich von einer Stirnseite 4 des Wärmetauschers bis zur gegenüberliegenden Stirnseite 5 erstreckt und einen Innenraum 6 umschließt, in den ein mit Erdgas gespeister Gebläsebrenner 7 hineinragt, wobei zwischen dem Innenmantel der Wendel 3 und der Peripherie des zylindrisch ausgebildeten Brenners 7 eine Distanz 8 ringförmig verbleibt.

Die Rohrwendel 3 ist in eine Mehrzahl von Segmenten geteilt, die aus Teilwendeln 9, 10, 11, 12 bestehen. Die Teilwendeln 9,10, 11, 12 können über beliebig viele Rohrleitungen mit beliebig vielen Einzelumläufen bestehen. Alle diese Teilwendeln weisen Ein- und Auslässe 13 und 14 auf, wobei die Teilwendeln 9 bis 11 bezüglich der Ein- und Auslässe 13 und 14 miteinander durchgängig verbunden sind, die Segmente also für das durch die Rohrwendeln strömende Fluid in Serie geschaltet sind. Es ist belanglos, in wie viele Teilwendeln die Rohrwendel aufgeteilt ist, wenigstens zwei Teilwendeln sind sinnvoll. Im Ausführungsbeispiel bilden die Wendeln 9, 10 und 11 einen Primärwärmetauscher 15, während die Teilwendel 12 einen Abgaswärmetauscher darstellt.

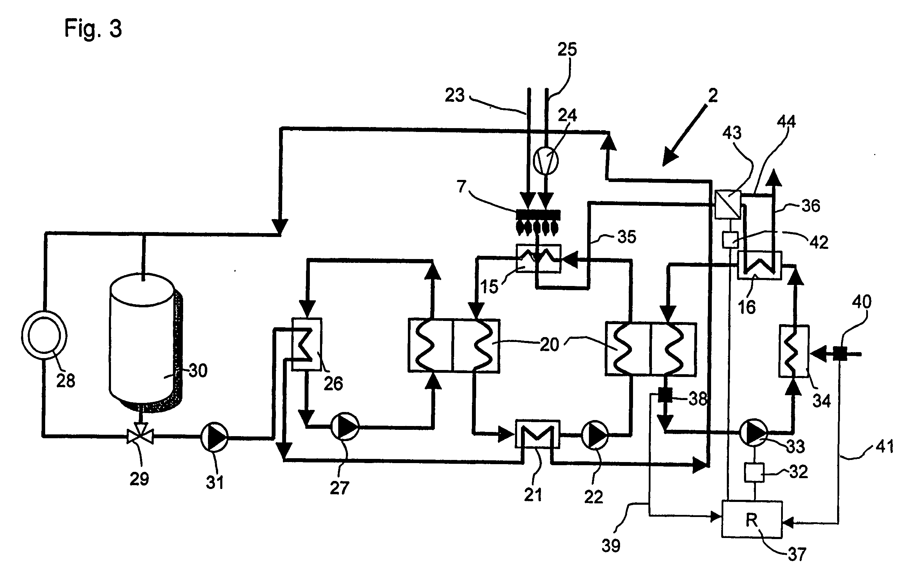

Die Adsorptionswärmepumpe 2 gemäß Fig. 3 weist einen Primärkreislauf auf, bei dem der Primärwärmetauscher 15 über ein Zeolithmodul 20 mit einem Niedertemperatur-Wärmetauscher 21 verbunden ist. Stromab des Niedertemperatur-Wärmetauschers ist eine Pumpe 22 angeordnet, mit der ausgangsseitig ein weiteres Zeolithmodul 20 in Verbindung steht, das wiederum mit dem Primärwärmetauscher 15 verbunden ist. Dieser wird von dem Brenner 7 beheizt, dem Erdgas über eine Leitung 23 und Luft über eine mit einem Gebläse 24 versehene Leitung 25 zugeführt wird. Das links gelegene Zeolithmodul 20 ist mit seinem zweiten Teil Teil eines Sekundärkreislaufs, in dem es zusammen mit einem weiteren Wärmetauscher 26 und einer Pumpe 27 in Serie liegt. Der weitere Wärmetauscher 26 liegt in einem Verbraucherkreislauf, der verbraucherseitig eine Zentralheizung 28 mit ihren Heizkörpern und parallel hierzu und über ein Umschaltventil 29 angesteuert einen Brauchwasserspeicher 30 aufweist. Im Zuge des Verbraucherkreislaufs ist eine Pumpe 31 vorgesehen, die Heizungswasser aus den Heizkörpern 28 der Zentralheizungsanlage bzw. je nach Stellung des Umschaltventils 29 auch aus dem Brauchwasserspeicher 30 abzieht und in den weiteren Wärmetauscher 26 fördert. Diesem nachgeschaltet ist der Niedertemperatur-Wärmetauscher 21, der dann wieder mit den Einströmseiten des Brauchwasserspeichers 30 oder den Heizkörpern der Zentralheizungsanlage 28 verbunden ist. Der Verbraucherkreislauf wird mithin über die beiden Wärmetauscher 26 und 21 aufgeheizt und über die Wärmesenken 28 bzw. 30 abgekühlt.

Das rechts gelegene adsorbierende Zeolithmodul 20 liegt verdampferseitig in einem Umweltwärmekreislauf zusammen mit einer von einem Elektromotor 32 angetriebenen Pumpe 33, einem Umweltwärmetauscher 34 und dem Abgaswärmetauscher 16, von dem dann die Kreislaufrückleitung wieder zurück zum Zeolithmodul 20 führt.

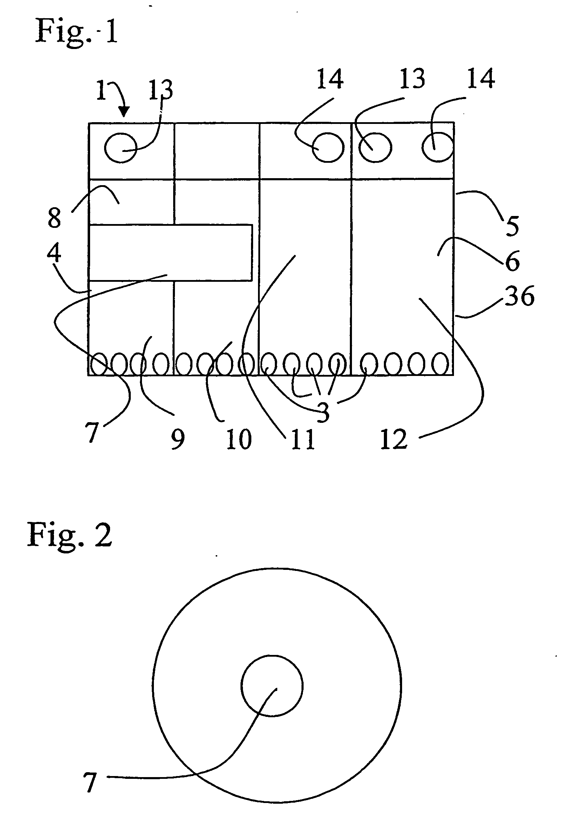

Das Abgas des Brenners 7 beaufschlagt zunächst den Primärwärmetauscher 15 und dann über eine Abgasleitung 35, deren Länge, vgl. Fig. 1, gegen Null gehen kann, den Abgaswärmetauscher 16, von wo das Abgas über einen Abgasstutzen 36 in die Atmosphäre gelangt. Für den Fall, daß das Temperaturniveau im Umweltwärmekreislauf durch den Abgaswärmetauscher 16 soweit angehoben wird, daß keine Wärme mehr von der Umwelt in den Umweltwärmekreislauf eingekoppelt werden kann, muß Vorsorge getroffen werden. Aus diesem Grund ist ein Regler 37 vorgesehen, dem als erster Eingang ein Temperaturfühler 38 über eine Leitung 39 zugeordnet ist und als zweiter Eingang ein Temperaturfühler 40 über eine Leitung 41. Eine Stelleitung 42 des Reglers ist mit einem elektromagnetischen Antrieb 43 verbunden, der in der Abgasleitung 35 liegt. Durch Betätigen dieses Ventils 43 ist es möglich, im Falle einer zu hohen Temperatur 38 das Abgas direkt über eine Bypassleitung 44 in den Abgasstutzen 36 unter Umgehung des Wärmetauschers 16 zu geben.

## Patentansprüche

1. Adsorptionswärmepumpe (2) mit einem Wärmetauscher (1) in Form einer einen Brenner (7) aufnehmenden Innenraum (6) umschließenden Rohrwendel (3), **dadurch gekennzeichnet, dass** die Rohrwendel aus wenigsten zwei axial fluchtenden aneinander angeordneten Teilwendeln (9, 10, 11, 12) besteht, die beide Anschlüsse (13, 14) aufweisen, und, dass die Abgase des Brenners (7) zunächst die dem Brenner (7) zugewandten Teilwendeln (9, 10, 11), welche in Serie geschaltet mit dem Primärkreislauf verbunden sind, durchströmen und dann die dem Brenner (7) fernst gelegenen Teilwendeln (12), welche mit ihren Anschlüssen in den Umweltkreislauf der Adsorptionswärmepumpe (2) geschaltet sind, durchströmen.

2. Adsorptionswärmepumpe nach Anspruch 1, **dadurch gekennzeichnet, daß** die dem Brenner (7) zugewandten Teilwendeln (9, 10, 11) aus wenigstens drei Teilwendeln bestehen.

3. Adsorptionswärmepumpe nach Anspruch 1, **dadurch gekennzeichnet, daß** der dem Brenner (7) fernst gelegenen Teilwendel (12) der Rohrwendel (3) ein Ventil (43) vorgeschaltet ist, das von einem Elektromagneten (42) betätigbar ist, der im Ausgang eines Reglers (37) liegt, dessen Eingänge von zwei Temperaturfühlern (38, 40) gebildet sind, von denen der eine (38) der Temperatur im Umweltwärmekreislauf der Adsorptionswärmepumpe (2) stromab eines Zeolithmoduls (20) und der andere der Temperatur der Umweltwärme in einem Wärmetauscher (34) des Umweltkreislaufs zugeordnet sind.

## Claims

1. An adsorption heat pump (2) comprising a heat exchanger (1) in the form of coiled tubing (3) enveloping an internal space (6) which accommodates a burner (7), **characterised in that** the coiled tubing consists of at least two axially aligned partial coils (9, 10, 11, 12) arranged adjacent to one another, both of which are fitted with connections (13, 14), and that the flue gases of the burner (7) first flow through the partial coils (9, 10, 11) disposed nearest to the burner (7), which are connected in series with the primary circuit, and then through the partial coils (12) disposed farthest away from the burner (7) whose connections lead to the environmental circuit of the adsorption heat pump (2).

2. An adsorption heat pump as claimed in Claim 1, **characterised in that** the partial coils (9, 10, 11) nearest the burner (7) consist of at least three partial coils.

3. An adsorption heat pump as claimed in Claim 1 **characterised in that** a valve (43) is provided ahead of the partial coil (12) of the coiled tubing (3), which is disposed farthest away from the burner (7), such valve being actuatable by an electromagnet (42) located in the output of a controller (37) whose inputs are formed by two temperature sensors (38, 40), one of which (38) is associated with the temperature in the environmental circuit of the adsorption heat pump (2) downstream of a zeolite module (20), and the other is associated with the temperature of the environmental heat in a heat exchanger (34) of the environmental circuit.

## Revendications

1. Pompe à chaleur à adsorption (2) avec un échangeur de chaleur (1) en forme d'un tube un spirale (3) entourant un intérieur (6) renfermant un brûleur (7), **caractérisée par le fait que** le tube en spirale se compose d'au moins deux éléments de tube (9, 10, 11, 12) alignés axialement, qui comprennent des raccords (13, 14), et que les gaz de combustion du brûleur (7) passent d'abord par les éléments de tube (9, 10, 11) en série orientés vers le brûleur (7) et reliés au circuit primaire, et passant ensuite par les éléments (12) les plus éloignés du brûleur (7), dont les raccors communiquent avec le circuit extérieur de la pompe à chaleur à adsorption.

2. Pompe à chaleur à adsorption suivant la revendication 1 **caractérisée par le fait que** les éléments de tube (9, 10, 11) orientés vers le brûleur (7) se composent d'eau moins trois éléments de tube.

3. Pompe à chaleur à adsorption suivant la revendication 1 **caractérisée par le fait que** l'élément de tube (12) du tube en spirale (3) le plus éloigné du brûleur (7) est précédée d'une valve (43) commandée par un électro-aimant (42) qui se trouve dans la sortie d'un régulateur (37) dont les entrées sont formées par deux sondes thermométriques (38, 40) dont l'une (38) est adaptée à la température du circuit de chaleur extérieur de la pompe à chaleur à adsorption (2) en aval d'un module à zéolithe (20), et l'autre adaptée à la température de la chaleur extérieure dans un échangeur de chaleur (34) du circuit extérieur.
